Europäisches Patentamt

European Patent Office

Office européen des brevets

(19)

(11) **EP 1 553 153 A2**

(12) **EUROPEAN PATENT APPLICATION**

(43) Date of publication:
**13.07.2005 Bulletin 2005/28**

(51) Int Cl.7: **C09K 11/02**, C09K 11/08

(21) Application number: **04029718.6**

(22) Date of filing: **15.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **15.12.2003 JP 2003416579**
**23.06.2004 JP 2004184834**

(71) Applicant: **Fuji Photo Film Co., Ltd**
**Kanagawa-ken (JP)**

(72) Inventors:
• **Ikada, Tomotake**
**Ashigarakami-gun Kanagawa-ken (JP)**
• **Takahashi, Kenji**
**Ashigarakami-gun Kanagawa-ken (JP)**
• **Fujimoto, Hiroshi**
**Ashigarakami-gun Kanagawa-ken (JP)**

(74) Representative: **Klunker . Schmitt-Nilson . Hirsch**
**Winzererstrasse 106**
**80797 München (DE)**

(54) **Electroluminescent cell and electroluminescent particle**

(57)    An electroluminescent cell (20) of dispersion type-like construction includes a pair of electrodes (24, 30) and an electroluminescent layer (26) arranged between the electrodes (24, 30). A plurality of electroluminescent particles, including a dielectric core and a phosphor-covering layer formed on the outside of said dielectric core, are dispersed in a dielectric binder of the electroluminescent layer (26). When a voltage is applied across the electroluminescent cell (20), an average electric-field intensity applied to the phosphor-covering layers of the electroluminescent particles is 1.5 or more times an average electric-field intensity applied to the entire electroluminescent layer (26).

**Description**

BACKGROUND OF THE INVENTION

Field of the Invention

The present invention relates to an electroluminescent cell and an electroluminescent particle, and more particularly to an electroluminescent cell of a dispersion type-like construction, in which electroluminescent particles including a phosphor are dispersed in an electroluminescent layer, and an electroluminescent particle suitable for use in such an electroluminescent cell.

Description of the Related Art

Electroluminescent cells are expected to be utilized as new display cells that emit light without employing a special light source. Conventional electroluminescent cells are of two general types, a dispersion type and a thin-film type. Initially, a brief description will be given of the respective basic structures, light-emitting mechanisms, and characteristics of the conventional dispersion type electroluminescent cell and thin-film type electroluminescent cell.

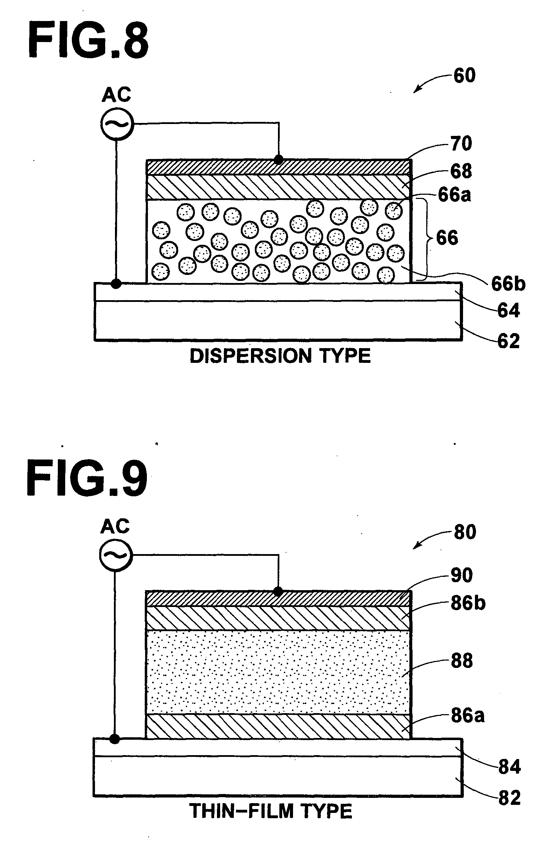

A typical dispersion type electroluminescent cell 60 is shown in Fig. 8. It consists of a transparent substrate 62 (e.g., a glass sheet, a polyethylene terephthalate (PET) sheet, etc.), a transparent electrode 64 formed on the transparent substrate 62, an electroluminescent layer 66 formed on the transparent electrode 64 and having phosphor particles 66a dispersed in a dielectric binder 66b, an insulating layer 68 formed on the electroluminescent layer 66, and a back electrode 70 formed on the insulating layer 68. There are instances where the electroluminescent cell 60 further includes a surface-protecting layer, etc. If an alternating voltage is applied between the transparent electrode 64 and back electrode 70, the phosphor particles 66a in the electroluminescent layer 66 emit light, which is taken out through the transparent electrode 64 and transparent substrate 62. The insulating layer 68 is used to intercept current flow and apply a stable high electric field to the phosphor particles 66a. Therefore, in the case where phosphor particles 66a are perfectly dispersed and current flow is interrupted within the electroluminescent layer 66, the insulating layer 68 may be omitted. If constructions employing different kinds of phosphor particles corresponding to a plurality of colors (see Fig. 8) are stacked with each other and intermediate electrodes aremade transparent, application to color displays is possible.

A phosphor particle in a dispersion type electroluminescent cell employs a particle where a deactivator is added to a phosphor base material. A typical example is ZnS : Cu, Cl that emits cyan light. According to the color desired, ZnS:Cu,Al (green), ZnS:Cu,Cl,Mn (orange), etc., are used. Because of a light-emitting mechanism described below, it is said that a deactivator needs to contain copper (Cu). The kinds of base materials to which copper can be added are limited and practical base materials are only ZnS, CaS, and SrS. Because of a limit to the base materials, in the phosphor particles of a dispersion type electroluminescent cell, a particle diameter of 20 $\mu$m or so is considered to be optimum. Phosphor particles slightly less than that particle diameter are sometimes employed, but if a particle diameter becomes less than 2 to 3 $\mu$m, it is known that brightness is considerably reduced, and consequently, a particle diameter cannot be reduced to less than 2 to 3 $\mu$ m.

A dispersion type electroluminescent cell emits light by recombination that occurs when elements added as deactivators operate as a donor and an acceptor. For instance, in the case of (ZnS:Cu,Cl), Cl operates as a donor and Cu operates as an acceptor. It is contemplated that the emission of light does not occur uniformly over the entire phosphor particle but occurs locally at a portion where the needle crystal of $Cu_2S$ is deposited along lattice defects in a ZnS particle.

A typical thin-film type electroluminescent cell 80 is shown in Fig. 9. As with the dispersion type, the thin-film type electroluminescent cell 80 consists of a transparent substrate 82, a transparent electrode 84 formed on the transparent substrate 82, a first insulating layer 86a formed on the transparent electrode 84, an electroluminescent layer 88 (which consists of a phosphor) formed into a thin film shape by vacuum deposition or sputtering, a second insulating layer 86b formed on the electroluminescent layer 88, and a back electrode 90 formed on the second insulating layer 86b. There are cases where the thin-film type electroluminescent cell 80 further includes a surface-protecting layer, a buffer layer interposed between the electroluminescent layer and the insulating layer, etc. Typically, the layers other than the electroluminescent layer 88 are similarly formed by a thin-film forming technique such as vacuum deposition, sputtering, etc. Therefore, the thickness of the thin-film type electroluminescent cell 80 shown in Fig. 9 is about 1/100 of that of the dispersion type electroluminescent cell 60 shown in Fig. 8, although the cell 80 is illustrated to be nearly the same in thickness as the cell 60 for the convenience of explanation. If an alternating voltage is applied between the transparent electrode 84 andback electrode 90, the electroluminescent layer 88 emits light, which is taken out through the transparent electrode 84 and transparent substrate 82. A typical phosphor material for the electroluminescent layer 88 is ZnS:Mn in which Mn (electroluminescent center) is doped in ZnS (base material) , and which emits orange light. In the case of the thin-film type, if a dual patterned or triple patterned construction, in which electroluminescent particle parts doped with different kinds of electroluminescent centers corresponding to a plurality of colors are two-dimensionally arranged, is adopted, or constructions corresponding to a plurality of colors (see Fig. 9) are stacked with each other, application to color displays is possible.

The dispersion type electroluminescent cell emits light by the recombination between a donor and an acceptor, whereas the thin-film type electroluminescent cell emits light by the collision excitation of an electroluminescent center by a hot electron running through the base material. This hot electron is produced by accelerating an electron, injected in the electroluminescent layer 88, from the interfaces between the electroluminescent layer 88 and insulating layers 86a, 86b and/or from a trap within the electroluminescent layer 88.

If electroluminescent cells of dispersion and thin-film types are compared with each other, they have advantages and disadvantages, respectively. The dispersion type has the following advantages: because the fabrication step includes no vacuum deposition, etc., the fabrication cost can be reduced and the size of the cell can be easily made large; and flexible electroluminescent cells with flexibility can also be fabricated. On the other hand, it has the following disadvantages: the brightness is low compared with the thin-film type; it lacks variety in color; and because the diameter of phosphor particles is large, it is unsuitable for a high-definition display, etc. The thin-film type has the following advantages: the brightness is high compared with the dispersion type; because it has a variety of electroluminescent centers that determine color, it can express various colors; and high-definition display is possible. On the other hand, it has the following disadvantages: the fabrication step is complex and the cost is high. In addition, in the thin-film type, the greater part of light emitted is totally reflected at the interface between the electroluminescent layer and insulating layer. As a result, the light taking-out efficiency is as low as 5 to 10%.

On the other hand, U.S. Patent Laid-Open No. 20040119400 and Japanese Unexamined Patent Publication No. 2000-195674 show an electroluminescent cell of dispersion type-like construction which is similar to the construction shown in Fig. 8. In the dispersion type-like construction, a phosphor material that was used in the electroluminescent layer of a conventional thin-film type electroluminescent cell is formed into particles. U.S. Patent Laid-Open No. 20040119400 also shows an electroluminescent cell of dispersion type-like construction that employs particles having a dielectric core and a phosphor-covering layer formed on the dielectric core, or particles further having a dielectric-covering layer formed on the phosphor-covering layer, instead of employing particles consisting of only a phosphor. Furthermore, a phosphor that was used in the electroluminescent layer of a conventional thin-film type electroluminescent cell is employed as the material of the phosphor-covering layer. In the electroluminescent cells disclosed in U. S. Patent Laid-Open No. 20040119400 and Japanese Unexamined Patent Publication No. 2000-195674, a light-emitting mechanism similar to a conventional thin-film type electroluminescent cell is considered to be realized in the following manner. That is, an electron is injected into the inside of a phosphor in the electroluminescent layer through the interface between the phosphor and the surrounding dielectric and/or through a trap in the phosphor. The electron is accelerated and a hot electron is produced. And the hot electron collides with the electroluminescent center of the phosphor and excites it. Since the basic construction itself is the same as the conventional dispersion type electroluminescent cell, the fabrication cost can be reduced.

Regardless of whether an electroluminescent cell employs a conventional phosphor containing Cu or a phosphor that was employed in the electroluminescent layer of the above-described thin-film type electroluminescent cell, the voltage applied across the cell needs to be efficiently applied to the phosphor particles of the electroluminescent layer, in order to obtain high light-emitting efficiency in an electroluminescent cell of dispersion type-like construction and/or start the emission of light with a low voltage. For that reason, for example, in the electroluminescent cell described in Japanese Unexamined Patent Publication No. 2000-195674, a dielectric with a high dielectric constant such as $BaTiO_3$ is used as a binder in the electroluminescent layer, and phosphor particles are dispersed in that dielectric.

As described above, in order to obtain high light-emitting efficiency and start the emission of light with a low voltage in an electroluminescent cell of dispersion type-like construction, a dielectric with a high dielectric constant has hitherto been used in the binder of the electroluminescent layer. However, in the case of an electroluminescent layer where particles consisting of only a phosphor are dispersed in a binder, even if a binder consisting of a dielectric with a high dielectric constant is employed, an average electric-field intensity applied to phosphor particles is only about 1.2 times an average electric-field intensity applied to the entire electroluminescent layer. Thus, light emission with high efficiency and high brightness cannot be obtained.

SUMMARY OF THE INVENTION

The present invention has been made in view of the circumstances described above. Accordingly, it is an object of the present invention to provide an electroluminescent cell of dispersion type-like construction in which the efficiency of voltage application to phosphor particles dispersed in the electroluminescent layer is improved and the light-emission efficiency and brightness are high. Another object of the invention is to provide an electroluminescent particle suitable for use in the electroluminescent cell of the present invention.

In accordance with the present invention, there is provided a first electroluminescent cell. The first electroluminescent cell includes a pair of electrodes and an electroluminescent layer arranged between the pair of electrodes. A plurality of electroluminescent particles, including a dielectric core and a phosphor-covering layer formed on the outside of the dielectric core, are dispersed in a dielectric binder of the electroluminescent layer. When a voltage is applied across the electroluminescent cell, an average electric-field intensity applied to the phosphor-covering layers of the electroluminescent particles is 1.5 or more times an average electric-field intensity applied to the entire electroluminescent layer.

In the present invention, the "electroluminescent particle" indicates the entirety of a particle and, when it is used in an electroluminescent cell, indicates the entirety of each of the particles dispersed in the electroluminescent layer. Although the phosphor part of a particle emits light, the electroluminescent particle according to the present invention means the entirety of a particle including a dielectric core, a dielectric-covering layer, a buffer layer, etc.

In addition, the "dispersion" used in the present invention means that electroluminescent particles do not always need to be perfectly dispersed in a dielectric binder. That is, some of the electroluminescent particles may contact with one another.

The first electroluminescent cell according to the present invention has an electroluminescent layer between a pair of electrodes, but may further include additional layers. For example, the first electroluminescent cell of the present invention may be provided with one or two insulating layers formed on one side or both sides of the electroluminescent layer, a buffer layer, a surface-protecting layer, etc.

The electroluminescent particle employed in the first electroluminescent cell of the present invention includes a dielectric core and a phosphor-covering layer formed on the outside of the dielectric core, but may further include additional layers. For example, it may include a buffer layer between the dielectric layer and the phosphor-covering layer. On the outside of the phosphor-covering layer, it may also include a pair of additional dielectric-covering layer and phosphor-covering layer, a surface-protecting layer, etc.

In the first electroluminescent cell of the present invention, it is preferable that an average core diameter of the dielectric cores of the electroluminescent particles be 1.2 $\mu$ m or greater and that a layer thickness of the electroluminescent layer be 100 $\mu$m or less.

In the first electroluminescent cell of the present invention, it is preferable that an average layer thickness $r_1$ of the phosphor-covering layers of the electroluminescent particles and an average radius $r_2$ of the dielectric cores have a relationship of $r_2/r_1 \geqq 1.0$.

In the first electroluminescent cell of the present invention, it is preferable that a dielectric constant $\varepsilon_1$ of the phosphor-covering layer and a dielectric constant $\varepsilon_2$ of the dielectric core have a relationship of $\varepsilon_2/\varepsilon_1 > 2.0$.

In accordance with the present invention, there is provided a second electroluminescent cell. The second electroluminescent cell includes a pair of electrodes and an electroluminescent layer arranged between the pair of electrodes. A plurality of electroluminescent particles, including a dielectric core, a phosphor-covering layer formed on the outside of the dielectric core, and a dielectric-covering layer formed on the outside of the phosphor-covering layer, are dispersed in a dielectric binder of the electroluminescent layer. When a voltage is applied across the electroluminescent cell, an average electric-field intensity applied to the phosphor-covering layers of the plurality of electroluminescent particles is 1.5 or more times an average electric-field intensity applied to the entire electroluminescent layer.

The second electroluminescent cell of the present invention, as with the first electroluminescent cell of the present invention, has an electroluminescent layer between a pair of electrodes, but may further include additional layers. For example, the second electroluminescent cell of the present invent ion may be provided with one or two insulating layers formed on one side or both sides of the electroluminescent layer, a buffer layer, a surface-protecting layer, etc.

The electroluminescent particle employed in the second electroluminescent cell of the present invention includes a dielectric core, a phosphor-covering layer formed on the outside of the dielectric core, and a dielectric-covering layer formed on the outside of the phosphor-covering layer, but may further include additional layers. For instance, it may include a buffer layer between the dielectric layer and the phosphor-covering layer and/or between the phosphor-covering layer and the dielectric-covering layer. On the outside of the dielectric-covering layer, it may also include a pair of additional phosphor-covering layer and dielectric-covering layer, a surface-protecting layer, etc.

In the second electroluminescent cell of the present invention, as with the first electroluminescent cell, it is preferable that an average core diameter of the dielectric cores of the electroluminescent particles be 1.2 $\mu$m or greater and that a layer thickness of the electroluminescent layer be 100 $\mu$m or less.

In the second electroluminescent cell of the present invention, it is preferable that an average layer thickness $r_1$ of the phosphor-covering layers of the aforementioned electroluminescent particles, an average radius $r_2$ of the dielectric cores, and an average layer thickness $r_3$ of the dielectric-covering layers have a relationship of $r_2/r_1 \geqq 1.0$ and $r_3/(r_1 + r_2) < 0.50$.

In the second electroluminescent cell of the present invention, it is preferable that a dielectric constant $\varepsilon_1$ of the phosphor-covering layer, a dielectric constant $\varepsilon_2$ of the dielectric core, and a dielectric constant $\varepsilon_3$ of the dielectric-

4

covering layer have a relationship of $\varepsilon_2/\varepsilon_1 > 2.0$ and $\varepsilon_3/\varepsilon_1 < 20$.

In the first and second electroluminescent cells of the present invention, it is preferable that the phosphor-covering layer of each electroluminescent particle comprise a phosphor including an electroluminescent center that collides with and is excited by a hot electron.

In the first and second electroluminescent cells of the present invention, it is preferable that a volume filling ratio for the electroluminescent particles in the electroluminescent layer be 40% or greater.

In accordance with the present invention, there is provided a first electroluminescent particle. The first electroluminescent particle is made up of a dielectric core with a core diameter of 1.2 µm or greater and a phosphor-covering layer formed on the outside of the dielectric core.

The first electroluminescent particle of the present invention includes a dielectric core and a phosphor-covering layer formed on the outside of the dielectric core, but may further include additional layers. For instance, it may include a buffer layer between the dielectric layer and the phosphor-covering layer. On the outside of the phosphor-covering layer, it may also include a pair of additional dielectric-covering layer and phosphor-covering layer, a surface-protecting layer, etc.

In the first electroluminescent particle of the present invention, it is preferable that a layer thickness ri of the phosphor-covering layer and a radius $r_2$ of the dielectric core have a relationship of $r_2/r_1 \geqq 1.0$.

In the first electroluminescent particle of the present invention, it is preferable that a dielectric constant $\varepsilon_1$ of the phosphor-covering layer and a dielectric constant $\varepsilon_2$ of the dielectric core have a relationship of $\varepsilon_2/\varepsilon_1 > 2.0$.

In accordance with the present invention, there is provided a second electroluminescent particle. The second electroluminescent particle is made up of a dielectric core with a core diameter of 1.2 µm or greater, a phosphor-covering layer formed on the outside of the dielectric core, and a dielectric-covering layer formed on the outside of the phosphor-covering layer.

The second electroluminescent particle of the present invention includes a dielectric core, a phosphor-covering layer formed on the outside of the dielectric core, and a dielectric-covering layer formed on the outside of the phosphor-covering layer, but may further include additional layers. For instance, it may include a buffer layer between the dielectric layer and the phosphor-covering layer and/or between the phosphor-covering layer and the dielectric-covering layer. On the outside of the dielectric-covering layer, it may also include a pair of additional phosphor-covering layer and dielectric-covering layer, a surface-protecting layer, etc.

In the second electroluminescent particle of the present invention, it is preferable that a layer thickness $r_1$ of the phosphor-covering layer, a radius $r_2$ of the dielectric core, and a layer thickness $r_3$ of the dielectric-covering layer have a relationship of $r_2/r_1 \geqq 1.0$ and $r_3/(r_1 + r_2) < 0.50$.

In the second electroluminescent particle of the present invention, it is preferable that a dielectric constant $\varepsilon_1$ of the phosphor-covering layer, a dielectric constants $\varepsilon_2$ of the dielectric core, and a dielectric constant $\varepsilon_3$ of the dielectric-covering layer have a relationship of $\varepsilon_2/\varepsilon_1 > 2.0$ and $\varepsilon_3/\varepsilon_1 < 20$.

In the first and second electroluminescent particles of the present invention, it is preferable that the phosphor-covering layer comprise a phosphor including an electroluminescent center that collides with and is excited by a hot electron.

The first electroluminescent cell of the present invention is constructed so that when a voltage is applied across the cell, an average electric-field intensity applied to the phosphor-covering layers of the electroluminescent particles is 1.5 or more times an average electric-field intensity applied to the entire electroluminescent layer. Therefore, the efficiency of voltage application to phosphor particles dispersed in the electroluminescent layer is high and it becomes possible to realize high light-emission efficiency and/or to start light emission with a low voltage. At the same time, an electric field applied to the dielectric binder in the electroluminescent layer is uniform and suppressed to a low level by operation of the dielectric core, so load on the dielectric binder is lightened and the operating lifetime of the electroluminescent cell becomes longer.

In the first electroluminescent cell of the present invention, if an average core diameter of the dielectric cores of the electroluminescent particles is 1.2 µm or greater and a layer thickness of the electroluminescent layer is 100 µm or less, the dispersibility of electroluminescent particles can be enhanced and the uniformity of an electroluminescent layer can be enhanced. In addition, it becomes possible to obtain the emission of light of sufficient brightness and/or to start the emission of light, with a practical voltage less than 400 V.

In the first electroluminescent cell of the present invention, an average layer thickness $r_1$ of the phosphor-covering layers of the electroluminescent particles and an average radius $r_2$ of the dielectric cores may have a relationship of $r_2/r_1 \geqq 1.0$, and/or a dielectric constant $\varepsilon_1$ of the phosphor-covering layer and a dielectric constants $\varepsilon_2$ of the dielectric core may have a relationship of $\varepsilon_2/\varepsilon_1 > 2.0$. According to this construction, it becomes possible to easily realize the above-described construction inwhich an average electric-field intensity applied to the phosphor-covering layers of the electroluminescent particles is 1.5 or more times an average electric-field intensity applied to the entire electroluminescent layer.

The second electroluminescent cell of the present invention, as with the first electroluminescent cell, is constructed so that when a voltage is applied across the cell, an average electric-field intensity applied to the phosphor-covering layers of the electroluminescent particles is 1.5 or more times an average electric-field intensity applied to the entire electroluminescent layer. Therefore, the efficiency of voltage application to phosphor particles dispersed in the electroluminescent layer is high and it becomes possible to realize high light-emission efficiency and/or to start light emission with a low voltage. At the same time, an electric field applied to the dielectric binder in the electroluminescent layer is uniform and suppressed to a low level by operation of the dielectric core, so load on the dielectric binder is lightened and the operating lifetime of the electroluminescent cell becomes longer. In addition, the electroluminescent particle used in the second electroluminescent cell of the present invention further has a dielectric-covering layer formed on the outside of the phosphor-covering layer, so a phosphor typically weak in water can be protected from external water and moisture. This makes the operating lifetime of the electroluminescent cell ever longer.

In the second electroluminescent cell of the present invention, as with the first electroluminescent cell, an average core diameter of the dielectric cores of the electroluminescent particles may be 1.2 $\mu$m or greater and a layer thickness of the electroluminescent layer may be 100 $\mu$m or less. According to this construction, the dispersibility of electroluminescent particles can be enhanced and the uniformity of an electroluminescent layer can be enhanced. In addition, it becomes possible to obtain the emission of light of sufficient brightness and/or to start the emission of light, with a practical voltage less than 400 V.

In the second electroluminescent cell of the present invention, an average layer thickness $r_1$ of the phosphor-covering layers of the aforementioned electroluminescent particles, an average radius $r_2$ of the dielectric cores, and an average layer thickness $r_3$ of the dielectric-covering layers may have a relationship of $r_2/r_1 \geqq 1.0$ and $r_3/(r_1 + r_2) <$ 0.50. According to this construction, it becomes possible to easily realize the above-described construction in which an average electric-field intensity applied to the phosphor-covering layers of the electroluminescent particles is 1.5 or more times an average electric-field intensity applied to the entire electroluminescent layer.

In the first and second electroluminescent cells of the present invention, if the phosphor-covering layer of each electroluminescent particle comprises a phosphor including an electroluminescent center that collides with and is excited by a hot electron, it becomes possible to obtain the emission of light of even higher brightness.

In the first and second electroluminescent cells of the present invention, if a volume filling ratio for the electroluminescent particles in the electroluminescent layer is 40% or greater, it becomes possible to obtain the emission of light of even higher brightness, while achieving high light-emission efficiency, a reduction in an emission-starting voltage, and a reduction in load on a dielectric binder by operation of the dielectric core.

If the first and second electroluminescent particles of the present invention are employed, it becomes possible to fabricate an electroluminescent cell that has the above-described advantages.


BRIEF DESCRIPTION OF THE DRAWINGS

The present invention will be described in further detail with reference to the accompanying drawings wherein:

FIG. 1 is a sectional view showing the electroluminescent layer of each electroluminescent cell of embodiments of the present invention and comparative examples obtained by computer simulations;
FIGS. 2A to 2D are sectional views showing an electroluminescent particle dispersed in each electroluminescent cell of the embodiments and comparative examples;
FIG. 3 is a graph showing the relationship between the ratio of the radius of a dielectric core to the layer thickness of a phosphor-covering layer and an electric field concentration degree, for some of the electroluminescent cells of the embodiments and comparative examples;
FIG. 4 is a graph showing the relationship between the ratio of the dielectric constant of a dielectric core to the dielectric constant of a phosphor-covering layer and an electric field concentration degree, for some of the electroluminescent cells of the embodiments and comparative examples;
FIG. 5 is a graph showing a difference in electric field concentration degree, obtained by model simulations, for a particle consisting of a dielectric core and a phosphor-covering layer and the surrounding dielectric binder, and a particle consisting of only a phosphor and the surrounding dielectric binder;
FIG. 6 is a sectional view showing a first electroluminescent cell constructed in accordance with the present invention;
FIG. 7 is a sectional view showing a second electroluminescent cell constructed in accordance with the present invention;
FIG. 8 is a sectional view showing a conventional dispersion type electroluminescent cell; and
FIG. 9 is a sectional view showing a conventional thin-film type electroluminescent cell.

DESCRIPTION OF THE PREFERRED EMBODIMENTS

Embodiments of the present invention will hereinafter be described in detail with reference to the drawings.

As previously described, in order to enhance the efficiency of voltage application to phosphor particles in an electroluminescent cell of dispersion type-like construction, a dielectric with a high dielectric constant has hitherto been used in the binder in the electroluminescent layer. However, in the case of using particles consisting of only a phosphor, even if a binder consisting of a dielectric with a high dielectric constant is employed, an average electric field intensity applied to phosphor particles is only about 1.2 times an average electric field intensity applied to the entire electroluminescent layer.

However, if an electroluminescent layer is formed by dispersing in a dielectric binder electroluminescent particles having a dielectric core and a phosphor-covering layer, or electroluminescent particles further having a dielectric-covering layer, instead of dispersing particles consisting of only a phosphor, a voltage applied to the electroluminescent cell can be concentrated on the phosphor-covering layer by operation of the dielectric core. For that reason, if suitably adjusted electroluminescent particles with such a dielectric core is employed, the ratio of an average electric field intensity applied to the phosphor part of the electroluminescent particle to an average electric field intensity applied to the entire electroluminescent layer (hereinafter referred to simply as an electric field concentration degree) can be greatly improved.

One adjustable factor is a factor relating to dimensions, such as the size of a dielectric core, the thickness of a phosphor-covering layer, and in the case of providing a dielectric-covering layer, the layer thickness. Another adjustable factor is a factor relating to a dielectric constant, such as the dielectric constant of a dielectric core, the dielectric constant of a phosphor-covering layer, and in the case of providing a dielectric-covering layer, the dielectric constant. Furthermore, a filling ratio for electroluminescent particles in an electroluminescent layer is also a factor influencing an electric field concentration degree.

In addition, even if a high electric field concentration degree is realized, the value of a voltage to be applied to an electroluminescent layer will exceed a practical value and become high, in order to obtain light of sufficient brightness and start the emission of light, if the electroluminescent layer becomes too thick. Therefore, it is preferable that the electroluminescent layer be as thin as possible. When making the electroluminescent layer thin, it is preferable to reduce the size of electroluminescent particles in the electroluminescent layer to a suitable size, but if the size of the electroluminescent particles is too small, dispersibility becomes bad and therefore uniform light emission cannot be obtained. In addition, there is a possibility that a short circuit will occur due to bad dispersibility.

The inventors have performed model simulations with respect to the electric field concentration degree and found the following facts. That is, a high electric field concentration degree equal to or greater than 1.5 could be realized in some of models of electroluminescent layers using electroluminescent particles that have a dielectric core and a phosphor-covering layer, and in some of models of electroluminescent layers using electroluminescent particles that have a dielectric core, a phosphor-covering layer, and a dielectric-covering layer. In order to realize such an electric field concentration degree equal to or greater than 1.5 in the case where electroluminescent particles, which have a dielectric core and a phosphor-covering layer, are used, it is preferable that a relationship of $r_2/r_1 \geqq 1.0$ be obtained between the average layer thickness $r_1$ of the phosphor-covering layer and the average radius $r_2$ of the dielectric core, and it is also preferable that a relationship of $\varepsilon_2/\varepsilon_1 \geqq 2.0$ be obtained between the dielectric constant $\varepsilon_1$ of the phosphor-covering layer and the dielectric constant $\varepsilon_2$ of the dielectric core. On the other hand, in the case where electroluminescent particles, which have a dielectric core, a phosphor-covering layer, and a dielectric-covering layer, are used, it is preferable that a relationship of $r_2/r_1 \geqq 1.0$ and $r_3/(r_1 + r_2) < 0.50$ be obtained between the average layer thickness $r_1$ of the phosphor-covering layer, the average radius $r_2$ of the dielectric core, and the average layer thickness $r_3$ of the dielectric-covering layer, and it is also preferable that a relationship of $\varepsilon_2/\varepsilon_1 > 2.0$ and $\varepsilon_3/\varepsilon_1 < 20$ be obtained between the dielectric constant $\varepsilon_1$ of the phosphor-covering layer, the dielectric constant $\varepsilon_2$ of the dielectric core, and the dielectric constant $\varepsilon_3$ of the dielectric-covering layer.

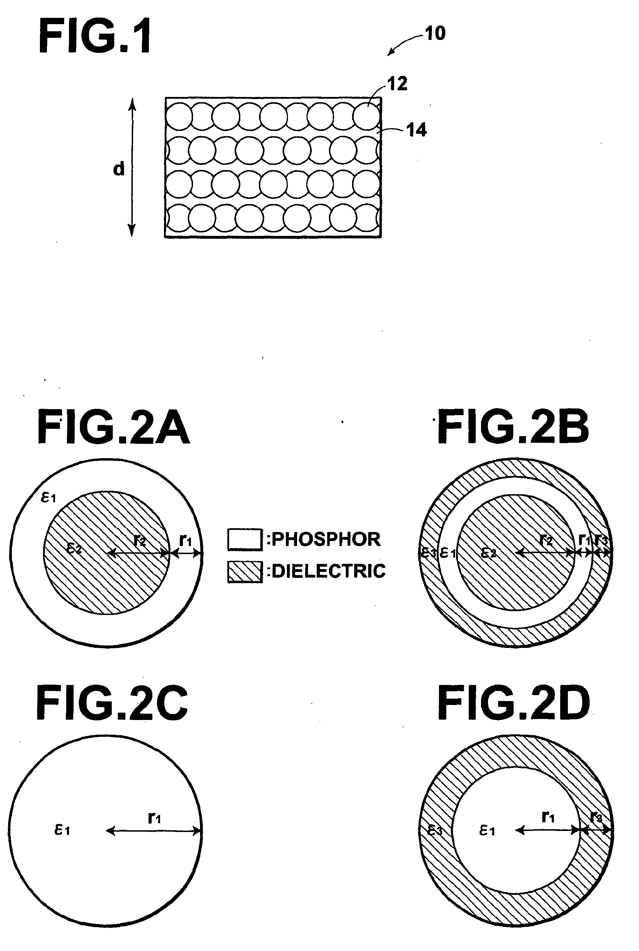

In the simulations, an electrostatic field analysis was performed by a general purpose finite-element method, using software ElecNet, version 6.7.2 (Infolytica). As shown in Fig. 1, for a plurality of models of electroluminescent layers in which electroluminescent particles 12 with a predetermined size are arranged at lattice points arranged in the form of a hexagonal close-packed lattice so that a volume filling ratio between the electroluminescent particles 12 and dielectric binder 14 in the electroluminescent layer 10 becomes 1:1 (i.e., so that the volume filling ratio of the electroluminescent particles 12 becomes 50%), simulations were run in order to calculate an electric field concentration degree.

As shown in Figs. 2A to 2D, four different kinds of electroluminescent particles 12 were used in the model simulations. Fig. 2A shows an electroluminescent particle consisting of a dielectric core of core radius $r_2$ and dielectric constant $\varepsilon_2$ and a phosphor-covering layer of layer thickness $r_1$ and dielectric constant $\varepsilon_1$ formed on the dielectric core. Fig. 2B shows an electroluminescent particle consisting of a dielectric core of core radius $r_2$ and dielectric constant $\varepsilon_2$, a phosphor-covering layer of layer thickness $r_1$ and dielectric constant $\varepsilon_1$ formed on the dielectric core, and a dielectric-covering layer of layer thickness $r_3$ and dielectric constant $\varepsilon_3$ formed on the phosphor-covering layer. Fig. 2C shows an electroluminescent particle consisting of only a phosphor of radius $r_1$ and dielectric constant $\varepsilon_1$. Fig. 2D shows an electroluminescent particle consisting of a dielectric core of core radius $r_1$ and dielectric constant $\varepsilon_1$ and a dielectric-covering layer of layer thickness $r_3$ and dielectric constant $\varepsilon_3$ formed on the dielectric core. The dielectric constant of the dielectric binder 14 is $\varepsilon_4$. The values of $r_1$ to $r_3$ and $\varepsilon_1$ to $\varepsilon_3$ are parameters specified for calculating an electric field concentration degree for each model.

The specified values of the simulation parameters and the electric field concentration degrees obtained are listed in Tables 1 and 2. Note that the value of the dielectric constant $\varepsilon_1$ is 8 for all models.

Table 1

| Embodiment No. | Particle construction (see Fig.2) | Phosphor layer $r_1$ [μm] | Dielectric core | | | | Dielectric-covering layer | | | | Binder | | Electric concentration degree | Electroluminescent layer d[μm] | Emission starting voltage [V] |
|---|---|---|---|---|---|---|---|---|---|---|---|---|---|---|---|
| | | | $2r_2$ [μm] | $r_2/r_1$ | $\varepsilon_2$ | $\varepsilon_2/\varepsilon_1$ | $r_3$ [μm] | $r_3/(r_1+r_2)$ | $\varepsilon_3$ | $\varepsilon_3/\varepsilon_1$ | $\varepsilon_4$ | $\varepsilon_4/\varepsilon_1$ | | | |
| 1 | (a) | 0.2 | 1.6 | 4.0 | 1000 | 125 | --- | --- | --- | --- | 20 | 2.5 | 6.2 | 10 | 80.6 |
| 2 | (a) | 0.15 | 1.2 | 4.0 | 1000 | 125 | --- | --- | --- | --- | 20 | 2.5 | 6.2 | 10 | 80.6 |
| 3 | (a) | 0.2 | 1.6 | 4.0 | 1000 | 125 | --- | --- | --- | --- | 20 | 2.5 | 6.2 | 20 | 161 |
| 4 | (a) | 0.5 | 9.0 | 9.0 | 1000 | 125 | --- | --- | --- | --- | 20 | 2.5 | 11.2 | 30 | 134 |
| 5 | (a) | 2.5 | 45 | 9.0 | 1000 | 125 | --- | --- | --- | --- | 20 | 2.5 | 11.2 | 60 | 268 |
| 6 | (a) | 0.1 | 1.8 | 9.0 | 1000 | 125 | --- | --- | --- | --- | 20 | 2.5 | 11.2 | 80 | 357 |
| 7 | (a) | 0.4 | 1.6 | 2.0 | 1000 | 125 | --- | --- | --- | --- | 20 | 2.5 | 3.1 | 10 | 161 |
| 8 | (a) | 0.75 | 1.6 | 1.1 | 1000 | 125 | --- | --- | --- | --- | 20 | 2.5 | 2.6 | 10 | 192 |
| 9 | (a) | 0.2 | 1.6 | 4.0 | 100 | 12.5 | --- | --- | --- | --- | 20 | 2.5 | 5.2 | 10 | 96.2 |
| 10 | (a) | 0.2 | 1.6 | 4.0 | 20 | 2.5 | --- | --- | --- | --- | 20 | 2.5 | 3.1 | 10 | 161 |
| 11 | (a) | 0.2 | 1.6 | 4.0 | 1000 | 125 | --- | --- | --- | --- | 2 | 0.25 | 3.1 | 10 | 161 |
| 12 | (a) | 0.1 | 1.8 | 9.0 | 1000 | 125 | --- | --- | --- | --- | 20 | 2.5 | 11.2 | 120 | 536 |
| 13 | (a) | 0.1 | 0.8 | 4.0 | 1000 | 125 | --- | --- | --- | --- | 20 | 2.5 | 6.2 | 10 | 80.6 |
| 14 | (b) | 0.2 | 1.6 | 4.0 | 1000 | 125 | 0.1 | 0.10 | 10 | 1.25 | 20 | 2.5 | 5.5 | 10 | 90.9 |
| 15 | (b) | 0.2 | 1.6 | 4.0 | 1000 | 125 | 0.1 | 0.10 | 2 | 0.25 | 20 | 2.5 | 4.5 | 10 | 111 |

Table 2

| Compara-tive Example No. | Parti-cle const-ruction (see Fig.2) | Phos-phor layer $r_1$ [μm] | Dielectric core | | | | Dielectric-covering layer | | | | Binder | | Electric concent-ration degree | Electro-lumines-cent layer d [μm] | Emission starting voltage [V] |
|---|---|---|---|---|---|---|---|---|---|---|---|---|---|---|---|
| | | | $2r_2$ [μm] | $r_2/r_1$ | $\varepsilon_2$ | $\varepsilon_2/\varepsilon_1$ | $r_3$ [μm] | $r_3/(r_1+r_2)$ | $\varepsilon_3$ | $\varepsilon_3/\varepsilon_1$ | $\varepsilon_4$ | $\varepsilon_4/\varepsilon_1$ | | | |
| 1 | (c) | 1.0 (parti-cle radius) | --- | --- | --- | --- | --- | --- | --- | --- | 20 | 2.5 | 1.2 | 10 | 417 |
| 2 | (c) | 0.4 (parti-cle radius) | --- | --- | --- | --- | --- | --- | --- | --- | 20 | 2.5 | 1.2 | 10 | 417 |
| 3 | (d) | 1.0 (core radius) | --- | --- | --- | --- | 0.1 | --- | 10 | 1.25 | 20 | 2.5 | 1.1 | 10 | 455 |
| 4 | (a) | 1.0 | 1.6 | 0.8 | 1000 | 125 | --- | --- | --- | --- | 20 | 2.5 | 1.3 | 18 | 692 |
| 5 | (a) | 0.2 | 1.6 | 4.0 | 2 | 0.25 | --- | --- | --- | --- | 20 | 2.5 | 1.1 | 10 | 455 |
| 6 | (b) | 0.2 | 1.6 | 4.0 | 1000 | 125 | 0.5 | 0.50 | 10 | 1.25 | 20 | 2.5 | 1.2 | 10 | 417 |
| 7 | (b) | 0.2 | 1.6 | 4.0 | 1000 | 125 | 0.1 | 0.10 | 1000 | 125 | 20 | 2.5 | 0.1 | 10 | 5000 |

EP 1 553 153 A2

The values of the dielectric constants $\varepsilon_1$ to $\varepsilon_4$ specified as simulation parameters are values specified by supposing materials to be used in actual electroluminescent cells. The specified values and supposed materials are listed in Table 3.

Table 3

|  | Dielectric constant | Supposed material |
|---|---|---|
| Phosphor covering layer | 8 | ZnS:Mn |
| Dielectric core | 1000 | $BaTiO_3$ |
|  | 100 | $SrTiO_3$ |
|  | 20 | $HfO_2$ |
|  | 2 | $SiO_2$ |
| Dielectric covering layer | 1000 | $BaTiO_3$ |
|  | 10 | $Al_2O_3$ |
|  | 2 | $SiO_2$ |
| Binder | 20 | Cyanoethyl cellulose |
|  | 2 | Epoxy resin |

Although the layer thickness d of an electroluminescent layer for each model does not influence an electric field concentration degree during model simulations, the layer thickness d is specified. From the value of the obtained electric field concentration degree n and the value of the layer thickness d, the value of an applied voltage U to an electroluminescent layer required for starting light emission is calculated by the following equation:

$$U = kd/n$$

where k is an emission start electric-field intensity peculiar to a phosphor used in an electroluminescent particle. In the model simulations, ZnS :Mn is the supposed material of a phosphor for all models, as listed in Table 3. Therefore, k = $5.0 \times 10^7$ V/m was employed as a unified value for k. The specified value of a layer thickness d and value of an obtained emission-starting voltage U for each model are also listed in Tables 1 and 2. The unified value for k is a value calculated from the fact that when an electroluminescent cell equivalent to comparative example 1 listed in Table 2 was fabricated and emitted light, the voltage applied to the electroluminescent layer at the time of the light emission was 417 V.

The results of the simulations listed in Tables 1 and 2 will hereinafter be examined in detail.

In themodels employing aparticle havingno dielectric core, that is, an electroluminescent particle shown in Fig. 2C or 2D, only electric field concentration degrees of the same level as before of 1.2 or so were obtained (see comparative examples 1 to 3). On the other hand, in some of the models using an electroluminescent particle that has a dielectric core and a phosphor-covering layer shown in Fig. 2A (see embodiments 1 to 13) and the models using an electroluminescent particle that has a dielectric core, a phosphor-covering layer, and a dielectric-covering layer shown in Fig. 2B (see embodiments 14 and 15), high electric field concentration degrees equal to or greater than 1.5 could be obtained.

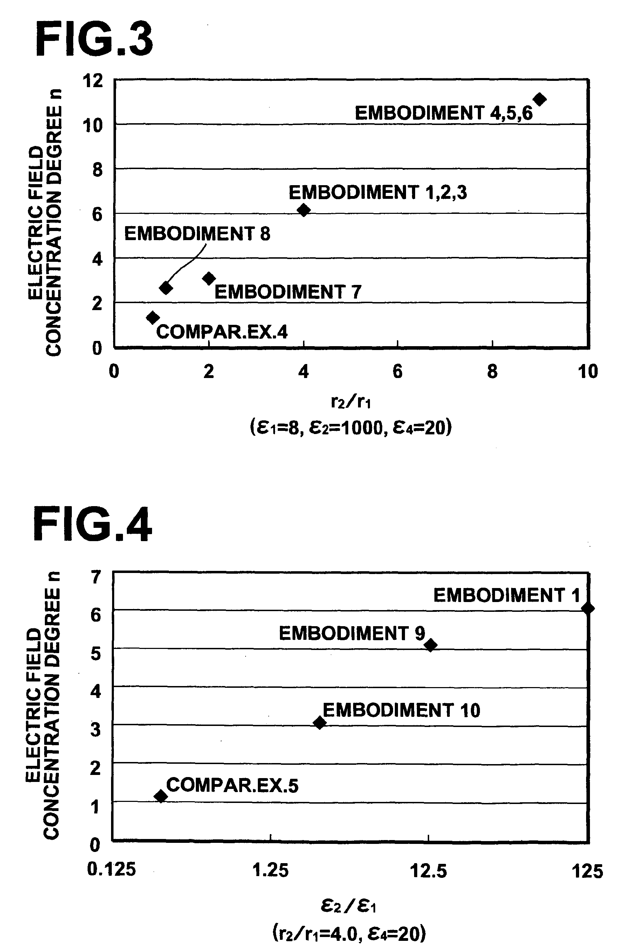

In the models using the electroluminescent particle shown in Fig. 2A, even if the absolute values of the layer thickness $r_1$ of the phosphor-covering layer and radius $r_2$ of the dielectric core change, the same electric field concentration degree can be obtained if the values of the ratios $r_2/r_1$ are the same, and if a value of $r_2/r_1$ is greater a higher electric field concentration degree can be obtained (see embodiments 1 to 3). For embodiments 1 to 8 and comparative example 4 in which the conditions of electric constants are the same, the relationship between the ratio $r_2/r_1$ and the electric field concentration degree n is shown in Fig. 3. From the results, it is preferable that the ratio $r_2/r_1$ be about 1 or greater in order to realize an electric field concentration degree equal to or greater than 1.5.

From the results, obtained from the models of embodiments 1 and 9 and comparative example 5 which use the electroluminescent particle shown in Fig. 2A and in which the value of $r_2/r_1$ is the same, it is found that if the ration $\varepsilon 2/\varepsilon_1$ between the dielectric constant $\varepsilon_1$ of the phosphor-covering layer and the dielectric constant $\varepsilon_2$ of the dielectric core becomes greater, a higher electric field concentration degree is obtained. For these models, the relationship between the ratio $\varepsilon_2/\varepsilon_1$ and the electric field concentration degree n is shown in Fig. 4. From the results, it is preferable that the ratio E 2/ E $_1$ be 2.0 or greater in order to realize an electric field concentration degree equal to or greater than 1.5.

If the emission-starting voltage U is examined, it changes in proportion to the layer thickness d of an electroluminescent layer if the electric field concentration degree is the same, as clearly seen from the aforementioned equation, U = kd/n (see embodiments 1 and 3, or embodiments 4, 5, 6, and 12). In embodiment 12 where the layer thickness d of the electroluminescent layer is 120 μm, the electric field concentration degree is very satisfactory like 11.2, but since the layer thickness d of the electroluminescent layer is thick, the emission-starting voltage U is high like 536 V. In order to start the emission of light with a practical voltage less than 400 V, it is preferable that the layer thickness d of an electroluminescent layer be 100 μm or less. Note that the emission-starting voltages listed in Tables 1 and 2 are voltages applied to electroluminescent layers when there is no insulating layer or buffer layer. Therefore, in the case where an actual electroluminescent cell is provided with an insulating layer or buffer layer, it is necessary to determine a voltage required of the entire electroluminescent cell in consideration of a voltage to be consumed by that layer.

In embodiment 13, the electric field concentration degree and emission-starting voltage are both good in the model simulation, but in the case where it is constructed as an actual electroluminescent cell, dispersibility is bad because the size of the electroluminescent particle is too small, and it is difficult to emit light uniformly. In addition, there is a possibility that a short circuit will occur due to bad dispersibility. In order to assure satisfactory dispersibility, it is preferable that an electroluminescent particle have an average core diameter of 1.2 μm or greater at the dielectric core.

Embodiment 11 differs from embodiment 1 in only the dielectric constant of the binder. In the embodiment 11, the electric field concentration degree is one-half that of the embodiment 1, but is higher by far than 1.5. This result indicates that even if a binder with a low dielectric constant of about 2 is employed, a high electric field concentration degree equal to or greater than 1.5 can be realized according to the present invention.

In the case of using the electroluminescent particle, shown in Fig. 28, which has a dielectric core, a phosphor-covering layer, and a dielectric-covering layer, it is preferable from the comparison between embodiments 14, 15 and comparative example 6 that in addition to the aforementioned relationship of $r_2/r_1 \geqq 1.0$, $r_3/ (r_1 + r_2) < 0.50$ be obtained-between the layer thickness $r_1$ of the phosphor-covering layer, the radius $r_2$ of the dielectric core, and the layer thickness $r_3$ of the dielectric-covering layer in order to realize an electric field concentration degree equal to or greater than 1.5. From the comparison between embodiments 14, 15 and comparative example 7 it is also preferable that in addition to the aforementioned relationship of $\varepsilon_2/\varepsilon_1 > 2.0$, $\varepsilon_3/\varepsilon_1 < 20$ be obtained between the dielectric constant $E_1$ of the phosphor-covering layer, the dielectric constant $\varepsilon_2$ of the dielectric core, and the dielectric constant $\varepsilon_3$ of the dielectric-covering layer.

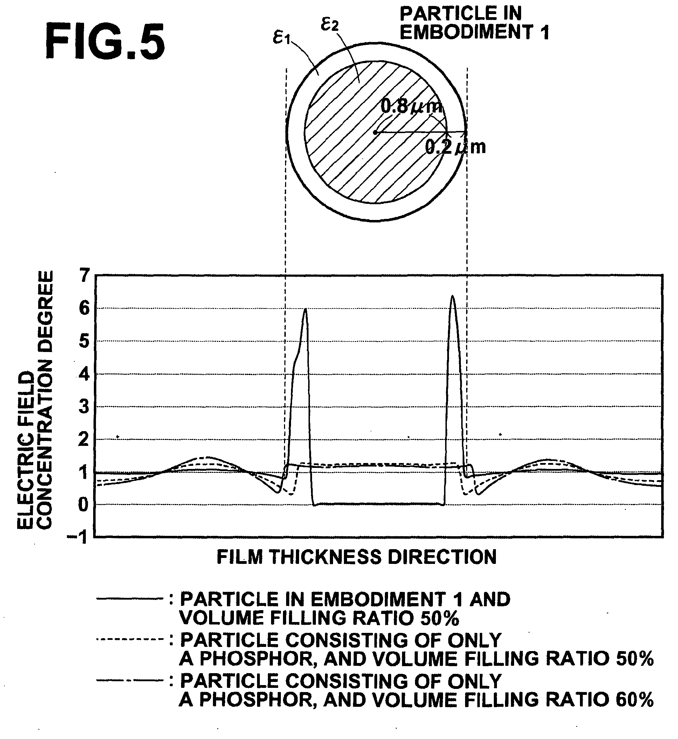

Fig. 5 shows a difference in electric field concentration degree, obtained by model simulations, between the model of the embodiment 1 and a model in which electroluminescent particles (Fig. 2C) consisting of only a phosphor ZnS:Mn of the same particle diameter as the electroluminescent particle of the embodiment 1 are dispersed in the same dielectric binder as the embodiment 1. For the electroluminescent particle consisting of only a phosphor, a model simulation where a volume filling ratio for electroluminescent particles in an electroluminescent layer is 50% and a model simulation where the volume filling ratio is 60% were run. In the model of the embodiment 1, a volume filling ratio for electroluminescent particles in the electroluminescent layer is 50%, as previously described.

From Fig. 5 it is found that in the models employing an electroluminescent particle consisting of only a phosphor, an electric field applied to the dielectric binder is equal to or greater than that applied to the phosphor and therefore an electric field concentration degree to the phosphor is low and the electric field applied to the dielectric binder is not uniform in strength and peaks locally. It is also found that the local peak of the electric field applied to the dielectric binder becomes higher if the volume fill ratio of electroluminescent particles in an electroluminescent layer is raised. That is, it is contemplated that in the case of an electroluminescent particle consisting of only a phosphor, if a volume filling ratio for the electroluminescent particle is raised to enhance brightness, local thermal load on a dielectric binder becomes greater and therefore the operating lifetime of the electroluminescent cell is considerably shortened.

On the other hand, it is found that in the case where the electroluminescent particle of the embodiment 1 having a dielectric core is employed, the electric field concentration degree to the phosphor is very high compared with the dielectric binder, and an electric field is also applied to the dielectric binder to some degree, but the manner in which an electric field is applied is uniform. That is, if an electroluminescent particle with a dielectric core, such as the electroluminescent particle of the embodiment 1, is employed, there is no local thermal load on the dielectric binder even if a volume filling ratio for electroluminescent particles in the electroluminescent layer is raised to enhance brightness, and therefore the operating lifetime of the cell becomes longer. Therefore, it is contemplated that in the case where an electroluminescent particle with a dielectric core is employed, it is preferable to increase a volume filling ratio for electroluminescent particles in the electroluminescent layer to some degree in order to enhance brightness, if the increase in the volume filling ratio has little influence on the electric field concentration and emission-starting voltage.

Hence, in the embodiment 1 with the particle structure shown in Fig. 2A and embodiment 14 with the particle structure shown in Fig. 2B, only a volume filling ratio for electroluminescent particles in the electroluminescent layer was changed with the dimensions and dielectric constant of the particle, dielectric constant of the binder, and layer thickness of the entire electroluminescent layer being kept the same as those listed in Table 1, and by the same model simulation as the aforementioned model simulation, how a change in the volume filling ratio influences the electric field concentration degree and emission-starting voltage was examined. In addition, relative brightness evaluated values were calculated on the assumption that the relative brightness between electroluminescent cells employing the double structure particle shown in Fig. 2A is proportional to a volume filling ratio for electroluminescent particles and that the relative brightness of the triple structure particle of Fig. 2B relative to the double structure particle is proportional to {(diameter of a double structure particle) / (diameter of a triple structure particle)}$^3$. The results are listed in Tables 4 and 5.

Table 4

Double Structure Particle (Fig. 2A)

| | Diameter of the entire electroluminescent particle | Volume filling ratio | Electric-field concentration degree | Emission starting voltage[V] | Relative brightness evaluated value |
|---|---|---|---|---|---|
| Embodiment 16 | 2.0 μm | 35 | 6.983 | 71.57 | 70 |
| Embodiment 17 | 2.0 μm | 40 | 6.679 | 74.82 | 80 |
| Embodiment 18 | 2.0 μm | 45 | 6.422 | 77.82 | 90 |
| Embodiment 1 | 2.0 μm | 50 | 6.2 | 80.6 | 100 |
| Embodiment 19 | 2.0 μm | 55 | 6.006 | 83.2 | 110 |
| Embodiment 20 | 2.0 μm | 60 | 5.834 | 85.65 | 120 |
| Embodiment 21 | 2.0 μm | 65 | 5.681 | 87.97 | 130 |
| Embodiment 22 | 2.0 μm | 70 | 5.542 | 90.17 | 140 |

Table 5

Double Structure Particle (Fig. 2B)

| | Diameter of the entire electroluminescent particle | Volume filling ratio | Electric-field concentration degree | Emission starting voltage[V] | Relative brightness evaluated value |
|---|---|---|---|---|---|
| Embodiment 23 | 2.2 μm | 35 | 6.194 | 80.71 | 53 |
| Embodiment 24 | 2.2 μm | 40 | 5.925 | 84.38 | 60 |
| Embodiment 25 | 2.2 μm | 45 | 5.697 | 87.76 | 68 |
| Embodiment 14 | 2.2 μm | 50 | 5.5 | 90.9 | 75 |
| Embodiment 26 | 2.2 μm | 55 | 5.328 | 93.83 | 83 |
| Embodiment 27 | 2.2 μm | 60 | 5.176 | 96.6 | 90 |
| Embodiment 28 | 2.2 μm | 65 | 5.039 | 99.21 | 98 |
| Embodiment 29 | 2.2 μm | 70 | 4.916 | 101.7 | 105 |

From the results, it is found that if a volume filling ratio for electroluminescent particles in an electroluminescent layer is increased, an electric field concentration degree to the electroluminescent particles is slightly reduced, but the reduction is not so great. In addition, if a volume filling ratio for electroluminescent particles in an electroluminescent layer is increased, the emission-starting voltage is slightly increased, but in the range of model simulations, it changes by about 20 V. Since such a change has little influence on the handling performance and operating lifetime of an electroluminescent cell, the advantage of brightness enhancement by an increase in a volume filling ratio is not impaired. Therefore, in an electroluminescent cell according to the present invention that employs electroluminescent particles having a dielectric core, it is preferable that a volume filling ratio for electroluminescent particles in the electroluminescent layer be 40% or greater and furtherpreferable that it be 60% or greater.

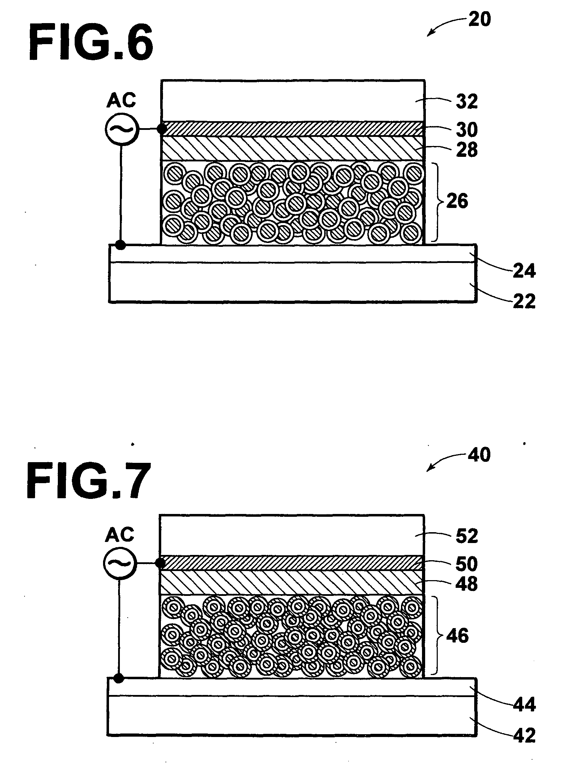

The experiments relating to the above-described embodiments and comparative examples were made by computer simulations, but an electroluminescent cell using an electroluminescent particle shown in Fig. 2A, which corresponds to the embodiments 1 to 13 and 16 to 22, can be constructed like an electroluminescent cell 20 shown in Fig. 6, which is made up of a substrate 22, a transparent electrode 24, an electroluminescent layer 26, an insulating layer 28, a back electrode 30, and a surface-protecting layer 32. The fabrication can be performed as follows. First, the substrate 22 is formed from a PET sheet and the transparent electrode 24 is formed by depositing indium tin oxide (ITO) on the substrate 22. Next, electroluminescent particles corresponding to each embodiment are dispersed in a cyanoethyl cellulose solution where a material (cyanoethyl cellulose) for a dielectric binder is mixed with a solvent of N,N-dimethylformamide at a volume ratio of 3:7 = (cyanoethyl cellulose) : (N,N-dimethylformamide) . The volume ratios of the electroluminescent particles dispersed in the cyanoethyl cellulose solution correspond to the volume filling ratios listed in Tables 4 and 5, respectively. Each of the electroluminescent particles to be dispersed can be made, for example, by depositing a phosphor-covering layer consisting of ZnS:Mn on a dielectric core of desired size by MOCVD (metalorganic chemical-vapor deposition). The electroluminescent layer 26 is formed by applying the particle-dispersed solution on the transparent electrode 24 and drying the solution. Next, $BaTiO_3$ particles of average particle size 0.2 $\mu$m are dispersed in the same cyanoethyl cellulose solution as the solution employed in forming the electroluminescent layer 26 and are applied on the electroluminescent layer 26 and are dried to form the insulating layer 28 of average layer thickness 5 $\mu$m. At this time, the volume ratio of cyanoethyl cellulose and $BaTiO_3$ particles in the particle-dispersed solution is 1:1. Finally, the back electrode 30 is formed by depositing aluminum on the insulating layer 28, and the surface-protecting layer 32 is formedby coating the back electrode 30 with a PET sheet. Note that when making an electroluminescent cell corresponding to the embodiment 11, epoxy resin is employed instead of cyanoethyl cellulose.

In addition, an electroluminescent cell using an electroluminescent particle shown in Fig. 2B, which corresponds to the embodiments 14, 15 and 23 to 29, can be constructed like an electroluminescent cell 40 shown in Fig. 7, which is made up of a substrate 42, a transparent electrode 44, an electroluminescent layer 46, an insulating layer 48, a back electrode 50, and a surface-protecting layer 52. The making method is the same as the method of making the electroluminescent cell 20 shown in Fig. 6. The electroluminescent particle can be made, for example, by depositing a phosphor-covering layer consisting of ZnS:Mn on a dielectric core of desired size by MOCVD, and forming a dielectric-covering layer on the phosphor-covering layer by a sol-gel method.

Note that the relative thickness of each layer, which constitutes the electroluminescent cells and electroluminescent particles shown in Figs. 6 and 7, is for the convenience of explanation and does not always coincide with an actual relative layer thickness. As previously described, the emission starting electric-field intensity k (= $5.0 \times 10^7$ V/m) was calculated by actually making an electroluminescent cell corresponding to the comparative example 1 listed in Table 1 and causing the electroluminescent cell to emit light. This electroluminescent cell was also made in the aforementioned manner.

While embodiments of an electroluminescent cell according to the present invention have been described in detail, each layer of the cell, materials of the electroluminescent particle, and layer construction are not to be limited to the above-described embodiments.

The material of the phosphor-covering layer of an electroluminescent particle may employ a phosphor containing copper (Cu) such as ZnS:Cu, Cl employed in conventional dispersion type electroluminescent cells, and may employ a phosphor containing an electroluminescent center that collides with and is excited by a hot electron, employed in conventional thin-film type electroluminescent cells, like ZnS:Mn employed in each of the above-described embodiments. In the case where the latter is employed, the light-emitting mechanism itself is similar to conventional thin-film type electroluminescent cells, total reflection conditions are not met due to the shape effect of a phosphor-covering layer and light scattering effect of an electroluminescent layer, and the efficiency of taking out light from an electroluminescent layer is enhanced compared with conventional thin-film type electroluminescent cells. Therefore, there is an advantage that highbrightness is obtained compared with conventional dispersion type electroluminescent cells and thin-film type electroluminescent cells. Phosphors other than ZnS:Mn are listed in Table 6.

Table 6

| UV(ultraviolet light emitting phosphor) | $ZnF_2$:Gd |
|---|---|
| B(blue light emitting phosphor) | $BaAl_2S_4$:Eu,CaS:Pb,SrS:Ce, SrS:Cu,$CaGa_2S_4$:Ce |
| G(green light emitting phosphor) | (Zn,Mg) S:Mn, ZnS:Tb, F, $Ga_2O_3$:Mn, $Zn_2SiO_4$:Mn, $SrAl_2O_4$:Eu |
| R(red light emitting phosphor) | (Zn,Mg) S :Mn, CaS: Eu, ZnS:Sm, F, $Ga_2O_2$:Cr,$MgGa_2O_4$:Eu |
| O(orange light emitting phosphor) | $Y_2O_3$:Eu |

The material of the electric core and dielectric-covering layer of an electroluminescent particle can employ $Y_2O_3$, $Ta_2O_5$, $BaTa_2O_6$, Sr(Zr, Ti)$O_3$, $PbTiO_3$, $Si_3N_4$, ZnS, $ZrO_2$, $PbNbO_3$, Pb(Zr, Ti)$O_3$, etc., in addition to $BaTiO_3$, $SrTiO_3$, $HfO_2$, $SiO_2$, $TiO_2$, and $Al_2O_3$ listed as supposed materials in Table 3. In the case where an electroluminescent particle further has a dielectric-covering layer, the same material may be employed in the dielectric-covering layer and dielectric core, but in order to reduce the shielding effect of the dielectric-covering layer and efficiently apply an electric field to the phosphor-covering layer, it is preferable to use in the dielectric core a material whose dielectric constant is higher.

The material of the dielectric binder of an electroluminescent layer can employ polyethylene, polypropylene, polystyrene resin, silicon resin, vinylidene-fluoride resin, etc., in addition to cyanoethyl cellulose and epoxy resin employed in the above-described embodiments. These materials may be mixed with dielectric particles having a high dielectric constant such as $BaTiO_3$, $SrTiO_3$, etc., in order to adjust dielectric constants.

In the case where an insulating layer is provided like the electroluminescent cells shown in Figs. 6 and 7, the material can employ $Y_2O_3$, $Ta_2O_5$, $BaTa_2O_6$, $TiO_2$, Sr(Zr, Ti)$O_3$, $SrTiO_3$, $PbTiO_3$, $Al_2O_3$, $Si_3N_4$, ZnS, $ZrO_2$, $PbNbO_3$, Pb(Zr, Ti)$O_3$, etc., in addition to $BaTiO_3$ mentioned above. To apply a stable high voltage to an electroluminescent layer, a material with a great dielectric constant that is less liable to break down is preferred.

The material of the substrate may employ a flexible sheet such as the aforementioned PET sheet and may also employ a glass substrate such as barium borosilicate glass, aluminosilicate glass, etc.

The material of the transparent electrode, in addition to ITO, can employ a material containing ZnO:Al, $Zn_2In_2O_5$, (Zn, Cd, Mg)O-(B, Al, Ga, In, Y)$_2O_3$-(Si, Ge, Sn, Pb, Ti, Zr)$O_2$, (Zn, Cd, Mg)O-(B, Al, Ba, In, Y)$_2O_3$-(Si, Sn, Pb)O, or MgO-$In_2O_3$ as a main component, a GaN material, a $SnO_2$ material, etc.

The back electrode may be formed by application of carbon paste.

The minimum layer construction of an electroluminescent cell according to the present invention is a pair of electrodes and an electroluminescent layer. Therefore, the insulating layer and surface-protecting layer, provided in the electroluminescent cells shown in Figs. 6 and 7, canbeomitted. Conversely, the present invention may include more layers than the electroluminescent cells shown in Figs. 6 and 7. For instance, it is possible to provide insulating layers on both sides of an electroluminescent layer, or provide a buffer layer.

Note that the electroluminescent particles, used in the embodiments of the electroluminescent cell according to the present invention, correspond to embodiments of the electroluminescent particle of the present invention.

While the present invention has been described with reference to the preferred embodiments thereof, the invention is not to be limited to the details given herein, but may be modified within the scope of the invention hereinafter claimed.

## Claims

1. An electroluminescent cell (20) comprising:

   a pair of electrodes (24, 30); and
   an electroluminescent layer (26), arranged between said pair of electrodes (24, 30), in which a plurality of electroluminescent particles, including a dielectric core and a phosphor-covering layer formed on the outside of said dielectric core, are dispersed in a dielectric binder;

   wherein, when a voltage is applied across said electroluminescent cell (20), an average electric-field intensity applied to the phosphor-covering layers of said plurality of electroluminescent particles is 1.5 or more times an average electric-field intensity applied to the entire electroluminescent layer (26).

2. The electroluminescent cell (20) as set forth in claim 1, wherein an average core diameter of the dielectric cores of said plurality of electroluminescent particles is 1.2 µm or greater and a layer thickness of said electroluminescent layer (26) is 100 µm or less.

3. The electroluminescent cell (20) as set forth in claim 1 or 2, wherein an average layer thickness $r_1$ of the phosphor-covering layers of said plurality of electroluminescent particles and an average radius $r_2$ of the dielectric cores have a relationship of $r_2/r_1 \geqq 1.0$.

4. The electroluminescent cell (20) as set forth in any one of claims 1 through 3, wherein a dielectric constant $\varepsilon_1$ of said phosphor-covering layer and a dielectric constant $\varepsilon_2$ of said dielectric core have a relationship of $\varepsilon_2/\varepsilon_1 > 2.0$.

5. An electroluminescent cell (40) comprising:

a pair of electrodes (44, 50); and
an electroluminescent layer (46), arranged between said pair of electrodes, in which a plurality of electroluminescent particles, including a dielectric core, a phosphor-covering layer formed on the outside of said dielectric core, and a dielectric-covering layer formed on the outside of said phosphor-covering layer, are dispersed in a dielectric binder;

wherein, when a voltage is applied across said electroluminescent cell (40), an average electric-field intensity applied to the phosphor-covering layers of said plurality of electroluminescent particles is 1.5 or more times an average electric-field intensity applied to the entire electroluminescent layer (46).

6. The electroluminescent cell (40) as set forth in claim 5, wherein an average core diameter of the dielectric cores of said plurality of electroluminescent particles is 1.2 µm or greater and a layer thickness of said electroluminescent layer (46) is 100 µm or less.

7. The electroluminescent cell (40) as set forth in claim 5 or 6, wherein an average layer thickness $r_1$ of the phosphor-covering layers of said plurality of electroluminescent particles, an average radius $r_2$ of the dielectric cores, and an average layer thickness $r_3$ of the dielectric-covering layers have a relationship of $r_2/r_1 \geqq 1.0$ and $r_3/(r_1 + r_2) < 0.50$.

8. The electroluminescent cell (40) as set forth in any one of claims 5 through 7, wherein a dielectric constant $\varepsilon_1$ of said phosphor-covering layer, a dielectric constant $\varepsilon_2$ of said dielectric core, and a dielectric constant $\varepsilon_3$ of said dielectric-covering layer have a relationship of $\varepsilon_2/\varepsilon_1 > 2.0$ and $\varepsilon_3/\varepsilon_1 < 20$.

9. The electroluminescent cell (20, 40) as set forth in any one of claims 1 through 8, wherein said phosphor-covering layer of each of said plurality of electroluminescent particles comprises a phosphor including an electroluminescent center that collides with and is excited by a hot electron.

10. The electroluminescent cell (20, 40) as set forth in any one of claims 1 through 9, wherein a volume filling ratio for said plurality of electroluminescent particles in said electroluminescent layer is 40% or greater.

11. An electroluminescent particle comprising:

a dielectric core with a core diameter of 1.2 µm or greater; and
a phosphor-covering layer formed on the outside of said dielectric core.

12. The electroluminescent particle as set forth in claim 11, wherein a layer thickness $r_1$ of the phosphor-covering layer and a radius $r_2$ of the dielectric core have a relationship of $r_2/r_1 \geqq 1.0$.

13. The electroluminescent particle as set forth in claim 11 or 12, wherein a dielectric constant $\varepsilon_1$ of said phosphor-covering layer and a dielectric constant $\varepsilon_2$ of said dielectric core have a relationship of $\varepsilon_2/\varepsilon_1 > 2.0$.

14. An electroluminescent particle comprising:

a dielectric core with a core diameter of 1.2 µm or greater;
a phosphor-covering layer formed on the outside of said dielectric core; and
a dielectric-covering layer formed on the outside of said phosphor-covering layer.

**15.** The electroluminescent particle as set forth in claim 14, wherein a layer thickness $r_1$ of said phosphor-covering layer, a radius $r_2$ of said dielectric core, and a layer thickness $r_3$ of said dielectric-covering layer have a relationship of $r_2/r1 \cong 1.0$ and $r_3/(r_1 + r_2) < 0.50$.

**16.** The electroluminescent cell as set forth in claim 14 or 15, wherein a dielectric constant $\varepsilon_1$ of said phosphor-covering layer, a dielectric constant $\varepsilon_2$ of said dielectric core, and a dielectric constant $\varepsilon_3$ of said dielectric-covering layer have a relationship of $\varepsilon_2/\varepsilon_1 > 2.0$ and $\varepsilon_3/\varepsilon_1 < 20$.

**17.** The electroluminescent particle as set forth in any one of claims 11 through 16, wherein said phosphor-covering layer comprises a phosphor including an electroluminescent center that collides with and is excited by a hot electron.

# FIG.1

10

12

14

d

# FIG.2A

$\varepsilon_1$

$\varepsilon_2$

$r_2$

$r_1$

☐ :PHOSPHOR

▨ :DIELECTRIC

# FIG.2B

$\varepsilon_3$ $\varepsilon_1$

$\varepsilon_2$

$r_2$

$r_1$ $r_3$

# FIG.2C

$\varepsilon_1$

$r_1$

# FIG.2D

$\varepsilon_3$

$\varepsilon_1$

$r_1$

$r_3$

# FIG.3

ELECTRIC FIELD CONCENTRATION DEGREE $n$

EMBODIMENT 4,5,6

EMBODIMENT 1,2,3

EMBODIMENT 8

EMBODIMENT 7

COMPAR.EX.4

$r_2/r_1$

$(\varepsilon_1=8, \varepsilon_2=1000, \varepsilon_4=20)$

# FIG.4

ELECTRIC FIELD CONCENTRATION DEGREE $n$

EMBODIMENT 1

EMBODIMENT 9

EMBODIMENT 10

COMPAR.EX.5

$\varepsilon_2/\varepsilon_1$

$(r_2/r_1=4.0, \varepsilon_4=20)$

# FIG.5

PARTICLE IN
EMBODIMENT 1

$\varepsilon_1$  $\varepsilon_2$

0.8μm

0.2μm

**ELECTRIC FIELD CONCENTRATION DEGREE**

7
6
5
4
3
2
1
0
-1

**FILM THICKNESS DIRECTION**

———— : PARTICLE IN EMBODIMENT 1 AND
VOLUME FILLING RATIO 50%

-------- : PARTICLE CONSISTING OF ONLY
A PHOSPHOR, AND VOLUME FILLING RATIO 50%

——·—— : PARTICLE CONSISTING OF ONLY
A PHOSPHOR, AND VOLUME FILLING RATIO 60%

# FIG.6

# FIG.7

# FIG.8

AC

60

70
68
66a
66
66b
64
62

**DISPERSION TYPE**

# FIG.9

AC

80

90
86b
88
86a
84
82

**THIN-FILM TYPE**